# EUROPÄISCHE PATENTSCHRIFT

(11) **EP 2 247 474 B1**
(45) Veröffentlichungstag und Bekanntmachung des Hinweises auf die Patenterteilung: **29.06.2011**
(21) Anmeldenummer: 09712679.1
(22) Anmeldetag: 10.02.2009
(51) Int. Cl.: B60R 25/04, G07C 9/00, E05B 17/18

(54) **LESEVORRICHTUNG ZUR AUFNAHME EINES KRAFTFAHRZEUGSCHLÜSSELS**
READING DEVICE FOR ACCOMMODATING A MOTOR VEHICLE KEY
DISPOSITIF DE LECTURE DESTINÉ À RECEVOIR UNE CLÉ DE VÉHICULE

(30) Priorität: 21.02.2008 DE 102008010473
(43) Veröffentlichungstag der Anmeldung: 10.11.2010
(73) Patentinhaber: Dr. Ing. h.c. F. Porsche AG, 70435 Stuttgart (DE); Conti Temic Microelectronic GmbH, 90411 Nürnberg (DE)
(72) Erfinder: WEINGART, Ulrich, 75428 Illingen (DE); ZINSER, Matthias, 71254 Ditzingen (DE); REINWALD, Martin, 88682 Salem/Weildorf (DE); ZOLL, Guido, 88361 Altshausen (DE)
(86) Internationale Anmeldenummer: PCT/EP2009/000909
(87) Internationale Veröffentlichungsnummer: WO 2009/103442

(56) Entgegenhaltungen:
- DE-A1- 1 678 091
- DE-A1- 2 605 588
- DE-A1- 19 747 732
- DE-C1- 19 839 347
- US-A- 4 638 652

## Beschreibung

Die Erfindung betrifft eine Lesevorrichtung zur Aufnahme eines Kraftfahrzeugschlüssels nach dem Oberbegriff des Anspruchs 1.

Aus der Praxis bekannte, insbesondere als Zündschlösser ausgebildete, Lesevorrichtungen zur Aufnahme eines Kraftfahrzeugschlüssels verfügen über ein einen Schlüsselschacht definierendes Gehäuse. In den Schlüsselschacht des Gehäuses der Lesevorrichtung ist ein Kraftfahrzeugschlüssel zumindest teilweise einführbar. Über eine mechanische und/oder elektronische Codierung des in eine Lesevorrichtung einzuführenden Kraftfahrzeugschlüssels kann eine Authentifizierung und Freigabe der Fahrberechtigung für das Kraftfahrzeug erfolgen.

Um einen Kraftfahrzeugschlüssel in einer Lesevorrichtung zu Positionieren, wird ein Kraftfahrzeugschlüssel zumindest abschnittsweise in den Schlüsselschacht der Lesevorrichtung eingeführt und im Schlüsselschacht über einen Verriegelungsmechanismus arretiert, um so ein ungewolltes Abziehen bzw. Entfernen des Kraftfahrzeugschlüssels von der Lesevorrichtung zu vermeiden. Insbesondere bei elektronisch codierten Kraftfahrzeugschlüsseln, die keinen konventionellen mechanischen Schlüsselbart zur mechanischen Codierung aufweisen, kann ein zumindest teilweise in den Schlüsselschacht eingeführter Kraftfahrzeugschlüssel zu mechanischen Schwingungen angeregt werden, infolgedessen der Krafilfahrzeugschlüssel das den Schlüsselschacht definierende Gehäuse abschnittsweise berührt. Dies kann zu einer unerwünschten Geräuschentwicklung im Kraftfahrzeuginnenraum führen. Es besteht daher ein Bedarf an einer Lesevorrichtung zur Aufnahme eines Kraftfafirzeugschlüssels, mit Hilfe derer eine solche Geräuscheptwicklung verhindert werden kann.

Eine Lesevorrichtung entsprechend dem Oberbegriff des Anspruchs 1 ist aus der US-A-4 638 652 bekannt.

Hiervon ausgehend liegt der vorliegenden Erfindung das Problem zu Grunde eine neuartiges Lesevorrichtung zur Aufnahme eines Kraftfahrzeugschlüssels zu schaffen. Dieses Problem wird durch eine Lesevorrichtung gemäß Anspruch 1 gelöst.

Erfindungsgemäß ist dem Gehäuse ein zumindest abschnittsweise derart in den Schlüsselschacht hineinragendes Element zugeordnet, dass das Element einen Einführquerschnitt für den Zündschlüssel umlaufend verengt, wobei das Element im Vergleich zu dem Gehäuse aus einem relativ weichen Werkstoff hergestellt ist.

Bei der erfindungsgemäßen Lesevorrichtung ragt ein aus einem relativ weichen Werkstoff hergestelltes Element in den vom Gehäuse definierten Schlüsselschacht unter umlaufender Verengung des Einführquerschnitts des Schlüsselschachts in denselben hinein, sodass dann, wenn im Betrieb ein zumindest abschnittsweise in den Schlüsselschacht eingeführter Kraftfahrzeugschlüssel zu Schwingungen angeregt wird, derselbe an dem aus dem relativ weichen Werkstoff hergestellten Element zur Anlage kommt. Hierdurch kann einer unerwünschten Geräuschentwicklung im Kraftfahrzeuginnenraum, die durch eine Schwingung des Kraftfahrzeugschlüssels im Betrieb des Kraftfahrzeugs verursacht wird, effektiv verhindert werden.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

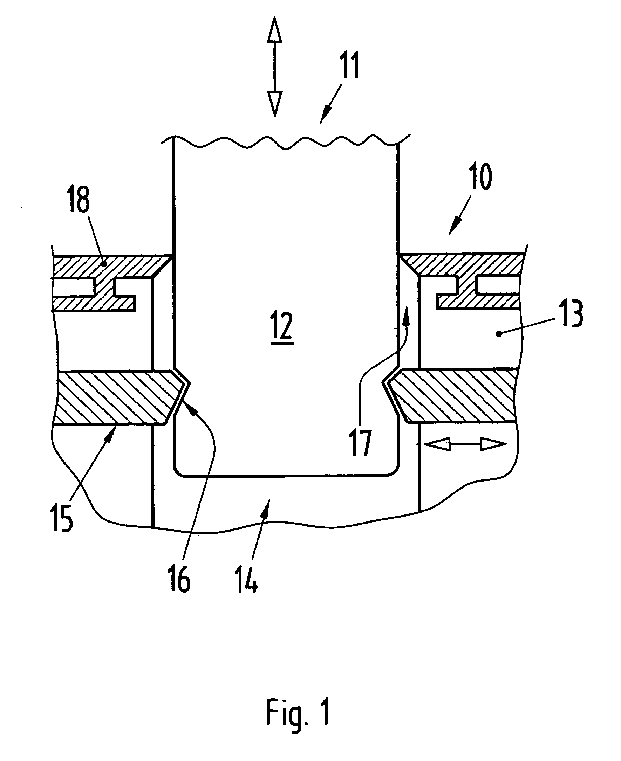

- Fig. 1: einen schematisierten Querschnitt durch ein bevorzugtes Ausführungsbeispiel einer erfindungsgemäßen Lesevorrichtung zur Aufnahme eines Kraftfahrzeugschlüssels.

Fig. 1 zeigt einen schematisierten Querschnitt durch eine erfindungsgemäße Lesevorrichtung 10 zur Aufnahme eines Kraftfahrzeugschlüssels zusammen mit einem Kraftfahrzeugschlüssel 11. Der Kraftfahrzeugschlüssel 11 ist mit einem Ende 12 in einen von einem Gehäuse 13 der Lesevorrichtung 10 definierten Schlüsselschacht 14 eingeführt. Bei dem mit dem Ende 12 in den Schlüsselschacht 14 eingeführten Kraftfahrzeugschlüssel 11 handelt es sich vorzugsweise um einen elektronisch codierten Kraftfahrzeugschlüssel ohne mechanischen Schlüsselbart, wobei der Kraftfahrzeugschlüssel 11 im Schlüsselschacht 14 mit Hilfe eines Verriegelungsmechanismus 15 vor einem unerwünschten Abziehen von der Lesevorrichtung 10 bzw. Herausfallen aus derselben gesichert wird. Gemäß Fig. 1 greift hierzu der Verriegelungsmechanismus 15 in eine entsprechende Kontur 16, die in das Ende 12 des Kraftfahrzeugschlüssels 11 eingebracht ist, ein. Wie Fig. 1 entnommen werden kann, bildet sich aufgrund von Fertigungstoleranzen zwischen dem in den Schlüsselschacht 14 eingesteckten Ende 12 des Kraftfahrzeugschlüssels 11 und dem Gehäuse 13 ein Spalt 17 aus.

Bei aus der Praxis bekannten Lesevorrichtungen kann es im Betrieb des Kraftfahrzeugs aufgrund einer Schwingung des Kraftfahrzeugschlüssels 11 zu einer unerwünschten Geräuschentwicklung kommen.

Erfindungsgemäß ist dem Gehäuse 13 ein zumindest abschnittsweise in den Schlüsselschacht 14 hineinragendes Element 18 zugeordnet, wobei das Element 18 einen Einführquerschnitt des Schlüsselschachts 14 für den Zündschlüssel 11 bzw. das Ende 12 desselben umlaufend verengt. Das Element 18 ist im Vergleich zum Gehäuse 13 aus einem relativ weichen Werkstoff hergestellt. Sollte der Zündschlüssel 11 im Betrieb des Kraftfahrzeugs zu mechanischen Schwingungen angeregt werden, so kommt der Zündschlüssel 11 an dem aus dem relativ weichen Werkstoff hergestellten Element 18 zur Anlage, wodurch einer unerwünschten Geräuschentwicklung effektiv entgegengewirkt werden kann.

Erfindungsgemäß verengt das auf dem relativ weichen Werkstoff hergestellte Element 18 den Einführquerschnitt des Schlüsselschachts 14 für den Zündschlüssel 11 umlaufend, nämlich derart, dass das Element 18 beim Einführen des Zündschlüssels 11 in den Schlüsselschacht 14 elastisch verformbar ist und nach dem Einführen des Zündschlüssels ringsum an der Kontur des Zündschlüssels 11, nämlich des Endes 12 des Zündschlüssels 11, anliegt. In diesem Fall berührt demnach das aus dem relativ weichen Werkstoff hergestellte Element 18 das Ende 12 des Zündschlüssels 11 allseitig auch dann, wenn der Schlüssel 11 nicht schwingt.

Im Unterschied zum gezeigten Ausführungsbeispiel ist es auch möglich aber nicht erfindungsgemäß, dass das aus dem relativ weichen Werkstoff hergestellte Element 18 dem Einführquerschnitt des Schlüsselschachts 14 für den Zündschlüssel 11 ausschließlich abschnittsweise verengt und dann, wenn der Zündschlüssel 11 mit dem Ende 12 in den Schlüsselschacht 14 eingeführt ist, nur abschnittsweise an der Kontur des Endes 12 des Zündschlüssels 11 anliegt.

Ebenso ist es im Unterschied zum gezeigten Ausführungsbeispiel möglich aber nicht erfindungsgemäß, dass das aus dem relativ weichen Werkstoff hergestellte Element 18 den Einführquerschnitt des Schlüsselschachts 14 für den Zündschlüssel 11 derart zumindest abschnittsweise verengt, dass der Zündschlüssel ohne elastische Verformung desselben in den Schlüsselschacht 14 einführbar ist.

In diesem Fall kommt der Zündschlüssel 11 nur dann an dem relativ weichen Element 18 zur Anlage, wenn der Zündschlüssel 11 im Betrieb des Kraftfahrzeugs zu Schwingungen angeregt wird.

Im gezeigten Ausführungsbeispiel der Fig. 1 ist das relativ weiche Element 18 dem relativ harten Gehäuse 13 derart zugeordnet, dass das Element 18 das Gehäuse 13 an einer von einem Fahrzeuginnenraum aus zugänglichen Seite zumindest teilweise überdeckt. In diesem Fall ist das relativ weiche Element 18 vom Innenraum aus sichtbar. Alternativ ist es auch möglich, dass das relativ weiche Element 18 dem relativ harten Gehäuse 13 derart zugeordnet ist, dass das relativ weiche Element 18 sandwichartig im Gehäuse aufgenommen ist, also zum Fahrzeuginnenraum hin vom Gehäuse teilweise überdeckt wird.

Das relativ weiche Element 18 weist vorzugsweise eine Härte nach Shore A zwischen 30 und 90 auf.

## Patentansprüche

1. Lesevorrichtung, insbesondere Zündschloss, zur Aufnahme eines Kraftfahrzeugschlüssels, mit einem einen Schlüsselschacht definierenden Gehäuse, wobei in den Schlüsselschacht ein Kraftfahrzeugschlüssel zumindest teilweise einführbar ist und dem Gehäuse (13) ein zumindest abschnittsweise in den Schlüsselschacht (14) hineinragendes Element (18) zugeordnet ist, , wobei das Element (18) im Vergleich zu dem Gehäuse (13) aus einem relativ weichen Werkstoff hergestellt ist, **dadurch gekennzeichnet, dass** das Element (18) einem Einführquerschnitt für den Kraftfahrzeugschlüssel (11) umlaufend verengt, und dass das Element (18) den Einführquerschnitt für den Kraftfahrzeugschlüssel (11) derart verengt, dass dasselbe beim Einführen des Kraftfahrzeugschlüssels in den Schlüsselschacht (14) elastisch verformbar ist und nach dem Einführen des Kraftfahrzeugschlüssels ringsum an einer Kontur des Kraftfahrzeugschlüssels (11) anliegt, so dass eine Geräuschentwicklung, die durch eine Schwingung des Kraftfahrzeugschlüssels im Betrieb des Kraftfahrzeugs verursacht wird, verhindert wird.

2. Lesevorrichtung nach Anspruch 1, **dadurch gekennzeichnet, dass** das relativ weiche Element (18) dem relativ harten Gehäuse (13) derart zugeordnet ist, dass das Element (18) das Gehäuse (13) an einer von einem Fahrzeuginnenraum aus zugänglichen Seite zumindest teilweise überdeckt.

3. Lesevorrichtung nach Anspruch 1, **dadurch gekennzeichnet, dass** das relativ weiche Element dem relativ harten Gehäuse derart zugeordnet ist, dass das Element sandwichartig im Gehäuse aufgenommen ist.

4. Lesevorrichtung nach den Ansprüchen 1 bis 3, **dadurch gekennzeichnet, dass** das relativ weiche Element eine Härte nach Shore A zwischen 30 und 90 aufweist.

## Claims

1. Read apparatus, in particular ignition lock, for receiving a motor vehicle key, having a housing which defines a keyway, it being possible to at least partially insert a motor vehicle key into the keyway, and an element (18), of which at least a portion projects into the keyway (14), being associated with the housing (13), the element (18) being produced from a material which is relatively soft in comparison to the housing (13), **characterized in that** the element (18) constricts the circumference of an insertion cross section for the motor vehicle key (11), and **in that** the element (18) constricts the insertion cross section for the motor vehicle key (11) in such a way that said element can be deformed in an elastic manner when the motor vehicle key is inserted into the keyway (14), and rests against a contour of the motor vehicle key (11) all the way around after the motor vehicle key is inserted, so that the development of noise, which is caused by vibration of the motor vehicle key during operation of the motor vehicle, is prevented.

2. Read apparatus according to Claim 1, **characterized in that** the relatively soft element (18) is associated with the relatively hard housing (13) in such a way that the element (18) at least partially covers the housing (13) on a side which is accessible from the vehicle interior.

3. Read apparatus according to Claim 1, **characterized in that** the relatively soft element is associated with the relatively hard housing in such a way that the element is accommodated in the housing in a sandwich-like manner.

4. Read apparatus according to Claims 1 to 3, **characterized in that** the relatively soft element has a Shore A hardness of between 30 and 90.

## Revendications

1. Dispositif de lecture, notamment contact d'allumage, destiné à accueillir une clé de véhicule automobile, comprenant un boîtier définissant un réceptacle de clé, une clé de véhicule automobile pouvant être introduite au moins partiellement dans le réceptacle de clé, et un élément (18) qui fait saillie au moins sur une portion dans le réceptacle de clé (14) étant associé au boîtier (13), l'élément (18) étant fabriqué dans un matériau relativement tendre en comparaison du boîtier (13), **caractérisé en ce que** l'élément (18) rétrécit périphériquement une section transversale d'introduction de la clé de véhicule automobile (11) et **en ce que** l'élément (18) rétrécit la section transversale d'introduction de la clé de véhicule automobile (11) de telle sorte que celui-ci peut être déformé par effet élastique lors de l'introduction de la clé de véhicule automobile dans le réceptacle de clé (14) et, après l'introduction de la clé de véhicule automobile, repose de manière annulaire contre un contour de la clé de véhicule automobile (11), ce qui permet d'éviter une émission sonore qui est provoquée par une oscillation de la clé de véhicule automobile pendant le fonctionnement du véhicule automobile.

2. Dispositif de lecture selon la revendication 1, **caractérisé en ce que** l'élément (18) relativement tendre est associé au boîtier (13) relativement dur de telle sorte que l'élément (18) recouvre au moins partiellement le boîtier (13) sur un côté accessible depuis l'espace intérieur du véhicule.

3. Dispositif de lecture selon la revendication 1, **caractérisé en ce que** l'élément relativement tendre est associé au boîtier relativement dur de telle sorte que l'élément est logé dans le boîtier à la manière d'un sandwich.

4. Dispositif de lecture selon l'une des revendications 1 à 3, **caractérisé en ce que** l'élément relativement tendre présente une dureté selon Shore A comprise entre 30 et 90.
